# EUROPÄISCHE PATENTSCHRIFT

(11) **EP 3 712 239 B1**
(45) Veröffentlichungstag und Bekanntmachung des Hinweises auf die Patenterteilung: **27.12.2023**
(21) Anmeldenummer: 19164503.5
(22) Anmeldetag: 22.03.2019
(51) Int. Cl.: C12C 1/15, C12C 1/027

(54) **RESTENTLEERUNG**
EMPTYING OF RESIDUES
VIDAGE DES RESTES

(43) Veröffentlichungstag der Anmeldung: 23.09.2020
(73) Patentinhaber: Bühler GmbH, 92339 Beilngries (DE)
(72) Erfinder: HARRER, Robert, 92339 Beilngries (DE)
(74) Vertreter: Vossius & Partner Patentanwälte Rechtsanwälte mbB

(56) Entgegenhaltungen:
- EP-A2- 2 258 825
- WO-A1-2013/044984
- DE-A1- 1 442 114
- DE-B- 1 186 820
- US-A- 3 840 435

## Beschreibung

Die vorliegende Erfindung betrifft einen Keimkasten, insbesondere eine Vorrichtung und ein Verfahren zum Entleeren eines Keimkastens.

Keimkästen werden in Mälzereien zum Keimen von Getreide eingesetzt. Hierfür wird das Getreide unter geregelten Temperatur- und Feuchtigkeitsbedingungen im Keimkasten gelagert. Dieser ist typischerweise rechteckig oder rund und kann im Falle eines runden Keimkastens einen Durchmesser von 15 - 40 m aufweisen. Derartige Keimkästen sind beispielsweise aus EP 2 258 822, EP 2 258 825, DE 1442114 und EP 1 641 909 bekannt. Um eine gleichmäßige Keimung gewährleisten zu können, muss das Getreide gewendet werden. Hierfür ist gewöhnlich ein Balken vorgesehen, an dem vertikal angeordnete Wendeschnecken angebracht sind. Die Wendeschnecken werden paarweise gegenläufig betrieben. An manchen Wendeschnecken können an der dem Boden zugewandten Abschlusskante der Wendeschnecke Werkzeuge angebracht sein, die sich nicht über die gesamte Abschlusskante der Wendeschnecke erstrecken und zur Auflockerung des Getreides während des Wendevorgangs eingesetzt werden. Ohne diese Auflockerung und der damit verbundenen Anhebung der Getreidereste oder Grünmalzreste vom Boden des Keimkastens würde das Getreide oder Grünmalz auf dem Boden anhaften und sich verfestigen.

Der Balken ist im Falle einer festen Horde innerhalb des Keimkastens beweglich angeordnet, um das gesamte Getreide wenden zu können. Dieser ist beispielsweise mit einer Vorrichtung wie aus DE 10 2004 032 442 bekannt gestützt und befestigt. Falls eine Drehhorde vorgesehen ist, ist der Balken fest und der Boden der Horde drehbar angeordnet.

Zum Be- und Entladen des Keimkastens ist in der Regel ferner eine horizontale Förderereinrichtung vorgesehen, die am Balken befestigt ist und in vertikaler Richtung verfahrbar ist. Hiermit wird das Getreide oder Grünmalz nach dem Keimprozess in Richtung einer Entladestation transportiert. Die Entladestation kann eine Öffnung oder ein Abführschacht sein. Die Entladestation kann im Zentrum oder an einer Außenwand innerhalb des Keimkastens angeordnet sein.

Die Wendeschnecken sollten nicht direkt bis auf den Boden reichen, weil ansonsten das Metall der Wendeschnecken auf dem Metall des Bodens reiben würde. Hier ist ein Spalt von 2 bis 3cm bevorzugt, da aufgrund der Größe des Keimkastens Fertigungstoleranzen und Wärmeausdehnung zu Unebenheiten des Bodens führen können. Damit sich die Wendeschnecken nicht mit dem Boden verhaken oder diesen beschädigen, müssen die Wendeschnecken einen vorgegebenen Abstand zum Boden einhalten. Beim Entladen des Keimkastens ist es jedoch unvermeidlich, dass Getreide oder Grünmalzreste auf den Wende- bzw. Förderschnecken oder auf dem Boden des Keimkastens verbleibt. Je nach Größe des Keimkastens können so mehrere 100 kg im Keimkasten verbleiben. In herkömmlichen Mälzereien wird daher das verbliebene Getreide oder Grünmalzreste im Keimkasten belassen, wodurch es zu einer Kontamination der neuen Charge kommt oder der Keimkasten wird manuell gereinigt. Dies erfordert einen hohen Aufwand an Zeit und Personal sowie hohe Sicherheitsvorkehrungen für die Arbeiten an der Maschine und in dem dazugehörigen Prozessraum.

Daher ist eine Aufgabe der vorliegenden Erfindung eine Vorrichtung und ein Verfahren bereitzustellen, die es ermöglichen, eine Restentleerung des Keimkastens durchzuführen.

Die Erfindung ist durch die Merkmale der unabhängigen Ansprüche 1, 11 und 14 definiert; die abhängigen Ansprüche definieren Ausführungsformen der Erfindung.

Die Erfindung umfasst einen Keimkasten mit einem Behälter zum Aufnehmen von Getreide oder Grünmalz, wobei der Behälter einen Boden aufweist. Innerhalb des Behälters ist ein Balken angeordnet. Am Balken angeordnet ist eine horizontal zum Boden angeordnete Fördereinrichtung, insbesondere eine Schnecke, zum Be- und Entladen des Behälters, wobei die Fördereinrichtung in vertikaler Richtung und im Wesentlichen parallel zum Boden verfahrbar ist. Ferner sind am Balken mehrere vertikal zum Boden angeordnete Wendeschnecken angebracht, die zum Wenden des Getreides oder Grünmalzes paarweise gegenläufig betrieben werden. Am unteren Ende, d.h. an einem dem Boden zugewandten Ende jeder der Wendeschnecken sind Abstreifwerkzeuge angebracht. Die Wendeschnecken sind ferner eingerichtet, zum Entleeren des Keimkastens gleichläufig betrieben zu werden.

Der Abstand zwischen den Abstreifwerkzeugen und dem Boden liegt bevorzugt zwischen 0 und 2 mm und beträgt besonders bevorzugt 0,5 mm. Die Abstreifwerkzeuge können radial über den Rand der jeweiligen Wendeschnecke überstehen. Ferner können die Abstreifwerkzeuge gebogen oder schräg ausgeführt sein. Der Boden weist bevorzugt ein Siebblech auf.

Der Keimkasten kann als feste Horde oder als Drehhorde ausgebildet sein. Die Abstreifwerkzeuge können derart angeordnet sein, dass sich Umfangskreise der Abstreifwerkzeuge benachbarter Wendeschnecken berühren. Die Abstreifwerkzeuge können ferner aus Kunststoff oder Metall gebildet sein.

Mittels der Abstreifwerkzeuge kann bei gleichläufiger Drehung der Wendeschnecken das auf dem Boden befindliche Getreide oder Grünmalzreste in Richtung einer Entladestation befördert werden.

Der Keimkasten weist ferner bevorzugt eine Hochdrucksprühleiste auf, die an einem Gehäuse der Fördereinrichtung angebracht ist und die eingerichtet ist, um durch Sprühen auf die Wendeschnecken Getreide oder Grünmalzreste von den Wendeschnecken zu entfernen. Die Hochdrucksprühleiste ist bevorzugt mit Wasser speisbar.

Durch die Erfindung werden ferner ein Verfahren zum Entleeren eines Keimkastens sowie ein Verfahren zum Nachrüsten eines Keimkastens, insbesondere eines Keimkastens gemäß dem Oberbegriff des Anspruchs 1, bereitgestellt.

Die Erfindung wird anhand der Figuren weiter beschrieben. Es zeigen
Fig. 1 eine perspektivische Gesamtansicht der erfindungsgemäßen Vorrichtung
Fig. 2 eine Detailansicht der erfindungsgemäßen Wendeschnecken im Bereich A von Fig. 1
Fig. 3 eine Detailansicht der erfindungsgemäßen Fördereinrichtung
Fig. 4 eine Seitenansicht der erfindungsgemäßen Vorrichtung
Fig. 5 eine schematische Ansicht der erfindungsgemäßen Wendeschnecken
Fig. 6 eine weitere schematische Ansicht der erfindungsgemäßen Wendeschnecken.

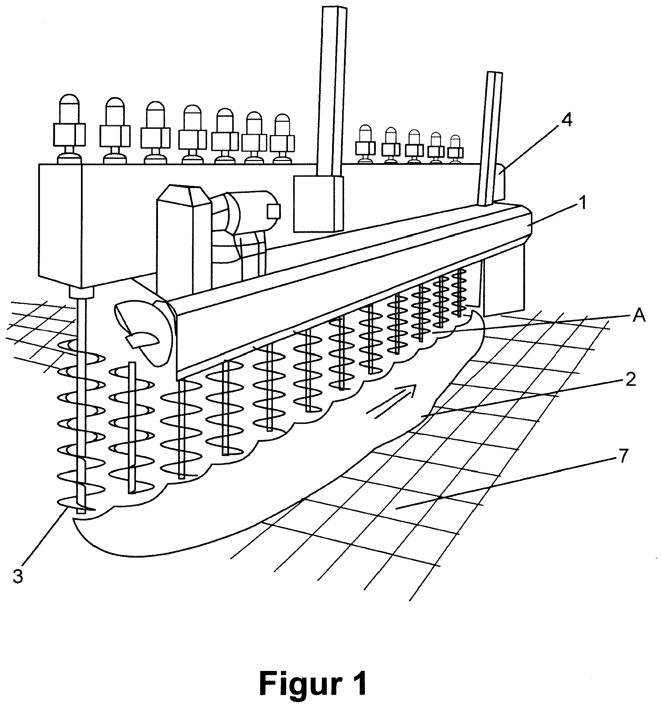

Figur 1 zeigt eine perspektivische Gesamtansicht der erfindungsgemäßen Vorrichtung. Diese besteht aus einem Keimkasten mit einem Behälter, der einen Boden 7 aufweist. Dieser kann als Siebboden ausgeführt sein. Der Behälter kann rechteckig oder rund ausgeführt sein. Der Behälter wird mit Getreide befüllt, wobei die Chargengröße mehrere 100 t betragen kann, bspw. 400 t Gerste als Grünmalz. Im Keimkasten werden eine bestimmte Temperatur und Feuchtigkeit eingestellt, um optimale Bedingungen für das Keimen des Getreides zu gewährleisten. Ferner kann eine Vorrichtung zum Abführen von CO₂ vorgesehen sein. Innerhalb des Behälters ist ein Balken 4 angeordnet, an dem zum Boden 7 vertikal ausgerichtete Wendeschnecken 3 sowie eine zum Boden 7 horizontale Fördereinrichtung 1 angebracht sind. Die Fördereinrichtung 1 ist in einer vertikalen Richtung beweglich. Der Balken 4 kann dabei beweglich innerhalb des Behälters angeordnet sein. Bei rechteckigen Keimkästen wird der Balken 4 linear innerhalb des Keimkastens bewegt, bei runden Keimkästen in radialer Richtung um den Mittelpunkt des Keimkastens herum. Dies wird als feste Horde bezeichnet. Alternativ kann im Falle eines runden Keimkastens der Boden 7 beweglich sein und der Balken 4 statisch. Dies wird auch als Drehhorde bezeichnet.

Die Fördereinrichtung 1 dient zum Be- und Entladen des Keimkastens mit Getreide oder Grünmalz und ist bevorzugt als Schnecke ausgeführt. Ferner kann an der Fördereinrichtung 1 eine Sprühleiste zum Befeuchten des Getreides im Keimkasten angebracht sein (nicht gezeigt). Ebenfalls kann eine Sprühleiste zum Reinigen des Bodens 7 angebracht sein. Die Wendeschnecken 3 werden paarweise gegenläufig betrieben und entweder der Boden 7 oder der Balken 4 innerhalb des Keimkastens bewegt, um das Getreide oder Grünmalz während des Keimens vollständig zu wenden. Durch das Wenden wird ein gleichmäßiges Keimen sichergestellt sowie verhindert, dass die Keime miteinander verwachsen und so ein Transport erschwert wird.

Der Keimvorgang dauert gewöhnlich 3-5 Tage, wobei mindestens einmal täglich das Getreide oder Grünmalz mechanisch gewendet wird. Nach Abschluss des Keimvorgangs wird das Getreide oder Grünmalz mittels der Fördereinrichtung 1 in Richtung eines Endes des Balkens 4 befördert und dort über eine Entladestation 9, beispielsweise einen Abwurfschacht abgeführt. Im Fall eines runden Keimkastens befindet sich die Entladestation 9 gewöhnlich im Zentrum, im Falle eines rechteckigen Keimkastens gewöhnlich entlang einer der Seiten des Keimkastens. Beim Entleeren verbleiben jedoch unvermeidlich Getreidereste oder Grünmalzreste 2 auf dem Boden 7, den Wendeschnecken 3 oder der Fördereinrichtung 1 bzw. fallen von der Fördereinrichtung 1 auf den Boden 7 herab. In der Regel ist eine vollständige Entleerung mittels der Schneckenförderung der Fördereinrichtung 1 nicht gewährleistet. Die Menge dieser Getreidereste oder Grünmalzreste kann je nach Größe des Keimkastens und der darin befindlichen Charge bis zu mehreren 100 kg betragen. Gerechnet auf die Jahresproduktion können so 300-400 t Endproduktverlust auftreten.

In herkömmlichen Anlagen werden diese Getreidereste oder Grünmalzreste entweder im Keimkasten belassen und kontaminieren so die neue Charge oder sie müssen manuell mittels Besen oder ähnlichem von den Wendeschnecken 3, der Fördereinrichtung 1 und dem Boden 7 entfernt werden. Die manuelle Reinigung erfordert jedoch hohe Sicherheitsstandards, da das Arbeiten im Keimkasten unter der Fördereinrichtung 1 gefährlich ist und somit Maßnahmen zur Sicherung der Fördereinrichtung 1 notwendig sind. Insbesondere besteht aufgrund des glatten Bodens, der evtl. verwendeten Reinigungsmittel sowie beweglicher Teile der Anlage Gefahr für das Reinigungspersonal.

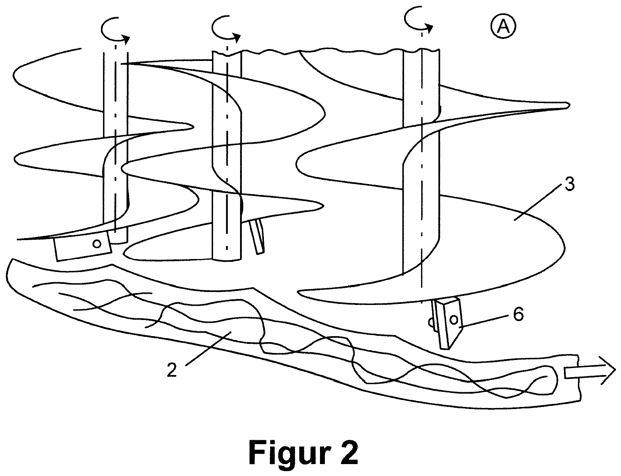

Daher sind an der erfindungsgemäßen Vorrichtung Mittel vorgesehen, um die Anlage automatisiert restentleeren zu können. Mit Bezug auf Figur 2 sind am unteren Ende jeder der Wendeschnecken 3 Abstreifwerkzeuge 6 vorgesehen. Der Abstand zwischen Boden 7 und Abstreifwerkzeugen 6 beträgt dabei bevorzugt zwischen 0 und 2 mm, besonders bevorzugt 0,5 mm. Ferner ist zwischen den Abstreifwerkzeugen 6 benachbarter Wendeschnecken 3 im Wesentlichen kein Spalt ausgebildet. D.h., die Umfangskreise der Abstreifwerkzeuge 6 zweier benachbarter Wendeschnecken 3 berühren sich. Als Umfangskreis ist hier die imaginäre Linie zu verstehen, die das radial äußere Ende eines Abstreifwerkzeugs 6 bei der Rotation der Wendeschnecke 3 bildet. Mit anderen Worten ist zwischen den Flächen am Boden, die durch die Abstreifwerkzeuge zweier benachbarter Wendeschnecken überstrichen werden, im Wesentlichen kein Spalt ausgebildet. Die Abstreifwerkzeuge 6 können aus Kunststoff, Metall oder einem anderen geeigneten Werkstoff ausgebildet sein. Die Abstreifwerkzeuge 6 können ohne großen Aufwand an bestehenden Anlagen nachgerüstet werden.

Zum Entleeren des Bodens 7 werden zunächst die Flächen der Wendel der Wendeschnecken 3 mittels Wasserstrahl aus einer Hochdrucksprühleiste 5 abgereinigt, das darauf liegengebliebene Produkt fällt auf den Boden des Keimkastens. Die Wendeschnecken 3 können gleichläufig oder gegenläufig drehen. Dann werden die Wendeschnecken 3, die im gewöhnlichen Betrieb zum Wenden des Getreides oder Grünmalzes während des Mälzens paarweise gegenläufig betrieben werden, gleichläufig betrieben (s. Drehrichtungspfeile in Figur 2), wobei bevorzugt die Drehzahl im Wesentlichen unverändert bleibt. Dadurch werden auf dem Boden 7 zurückgebliebene Getreidereste oder Grünmalzreste mittels der Abstreifwerkzeuge 6 von einer Wendeschnecke 3 zur benachbarten Wendeschnecke 3 und in Richtung eines Endes des Balkens 4 befördert, an dem sich die Entladestation 9 befindet. Dieses ist in Figur 2 durch einen Richtungspfeil angedeutet. Mit anderen Worten kann durch die Drehrichtungsänderung bzw. den gleichläufigen Betrieb der Wendeschnecken 3 im Gegensatz zum paarweise gegenläufigen Betrieb anstelle einer vertikalen Förderung bzw. eines Auflockerns des Getreides oder Grünmalzes eine horizontale Förderung verwirklicht werden. Durch ein Fahren des Balkens 4 durch den gesamten Keimkasten bzw. durch Drehung des Bodens 7 kann so der gesamte Boden 7 des Keimkastens entleert werden. Die Einrichtung zur Änderung der Drehrichtung der Wendeschnecken 3 kann bspw. im Zuge einer Softwareanpassung und mit Wendeschütze durchgeführt werden.

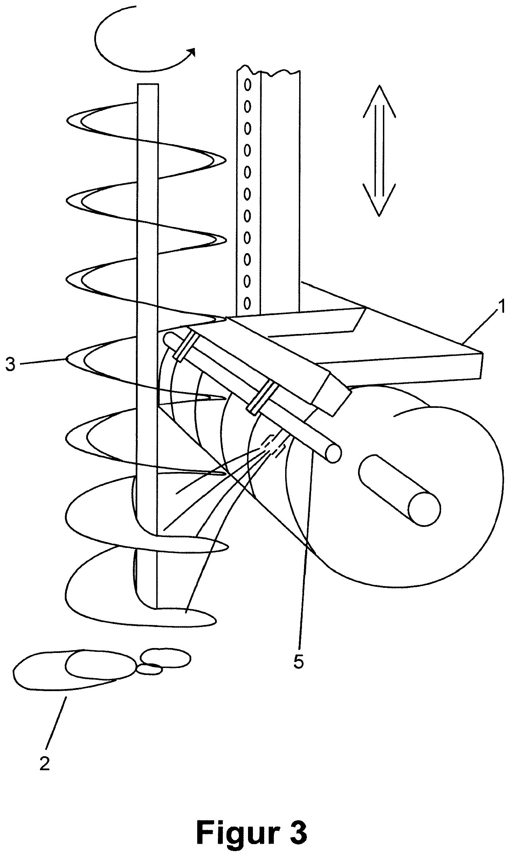

Figur 3 zeigt eine Detailansicht der erfindungsgemäßen Fördereinrichtung 1. An dieser ist eine Hochdrucksprühleiste 5 angebracht. Mindestens eine Düse ist jeweils auf eine der Wendeschnecken 3 gerichtet. Es können auch mehrere Düsen je Wendeschnecke vorgesehen sein. Hierfür kann die vorhandene Wasserversorgung, die eingerichtet ist, um das Getreide während des Mälzens zu Befeuchten sowie mittels Hochdruck den Boden 7 zu reinigen, verwendet werden, indem die zusätzliche Hochdrucksprühleiste 5 daran angeschlossen wird. Wie durch den Doppelpfeil in Figur 3 angedeutet ist die Fördereinrichtung 1 in vertikaler Richtung beweglich. Durch ein Auf- und Abfahren der Fördereinrichtung 1 bei gleichzeitiger Rotation der Wendeschnecken 3 und Betreiben der Hochdrucksprühleiste 5 können so die Wendeschnecken 3 über ihre gesamte Höhe von Getreideresten oder Grünmalzreste befreit werden. Die Hochdrucksprühleiste 5 wird dabei bevorzugt mit wenig Wasser und viel Druck betrieben. Die herabgefallenen Getreidereste oder Grünmalzreste werden dann mittels der oben beschriebenen Abstreifwerkzeuge 6 in Richtung der Entladestation 9 befördert und können weiterverarbeitet werden.

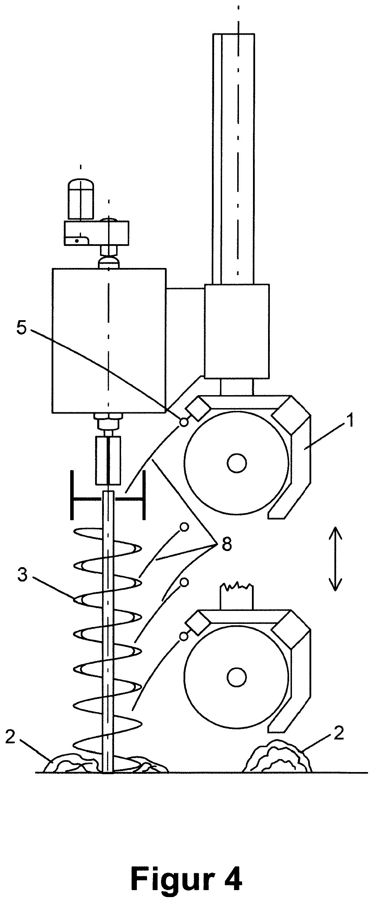

Figur 4 ist eine Seitenansicht der erfindungsgemäßen Vorrichtung, auf der das Reinigen der Wendeschnecken 3 mittels Auf- und Abfahren der Fördereinrichtung 1 bzw. der daran befestigten Hochdrucksprühleiste 5 gezeigt wird. Die Fördereinrichtung 1 ist einmal in maximaler vertikaler Position und einmal einer vertikal herabgesenkten Position dargestellt. Der Wasserstrahl 8 der Hochdrucksprühleiste 5 ist mit durchgezogenen Linien dargestellt. Die Wendeschnecken 3 werden durch die Hochdrucksprühleiste 5 von Getreideresten oder Grünmalzreste befreit, die daraufhin auf dem Boden 7 fallen. Auch in der Fördereinrichtung 1 verbliebenes Getreide oder Grünmalz kann herabfallen und sich am Boden 7 als Getreidereste oder Grünmalzreste 2 sammeln. Die Getreidereste oder Grünmalzreste 2 werden dann, wie oben beschrieben, mittels der gleichläufig betriebenen Wendeschnecken 3 und der daran befestigten Abstreifwerkzeuge 6 (nicht gezeigt) in Richtung eines Endes des Balkens 4 zur Entladestation 9 transportiert.

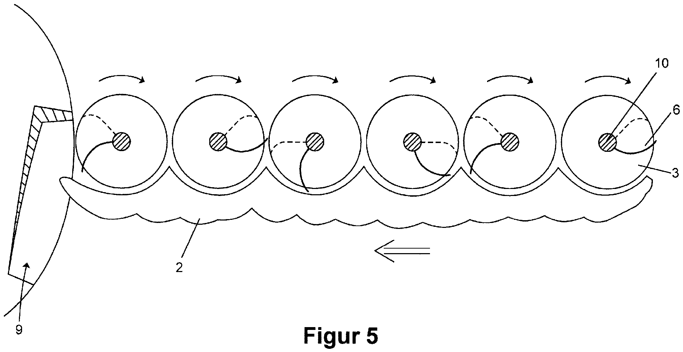

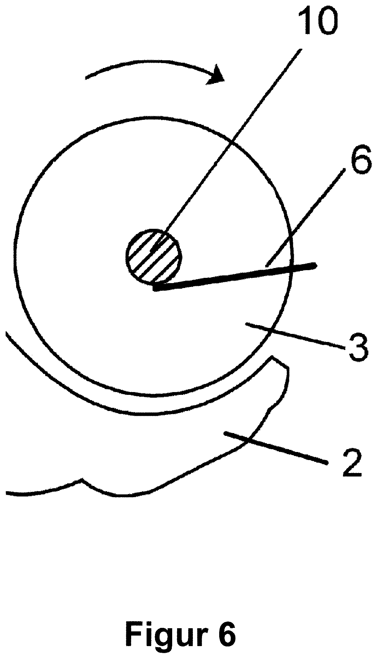

Figur 5 zeigt eine schematische Ansicht der erfindungsgemäßen Wendeschnecken 3 als Draufsicht auf den Keimkasten. Die Abstreifwerkzeuge sind an der Unterseite des letzten Flankenprofils der jeweiligen Wendeschnecke 3, d.h. an der dem Boden 7 zugewandten Seite der jeweiligen Wendeschnecke 3 befestigt. Insbesondere zeigt Figur 5, dass die Abstreifwerkzeuge 6 an der Schneckenwelle 10 der Wendeschnecken 3 anliegen können. Ferner können die Abstreifwerkzeuge 6 gebogen ausgeführt sein. Insbesondere können die Abstreifwerkzeuge 6 in Bezug zur Rotationsrichtung konkav ausgebildet sein. Alternativ können, wie in Figur 6 gezeigt, die Abstreifwerkzeuge 6 schräg in Bezug auf eine radiale Richtung an der Wendeschnecke 3 angebracht sein. Desweiteren können die Abstreifwerkzeuge 6 über den Umfang der Wendeschnecken 3 heraus ragen. Bevorzugt werden die Abstreifwerkzeuge 6 so ausgeführt, dass sich die imaginären Umfangskreise, die durch das radial äußere Ende der Abstreifwerkzeuge 6 bei Rotation der Wendeschnecken 3 gebildet werden, der jeweiligen benachbarten Abstreifwerkzeuge 6 berühren. Mit anderen Worten ist im Falle des Aufeinandertreffens der benachbarten Abstreifwerkzeuge 6 im Wesentlichen kein Spalt zwischen ihnen ausgebildet. Die Rotationspfeile in Figur 5 zeigen den gleichläufigen Betrieb der Wendeschnecken 3 zum Entleeren des Keimkastens. Wie oben beschrieben werden dadurch mit Hilfe der Abstreifwerkzeuge 6 Getreidereste oder Grünmalzreste in einer horizontalen Richtung entlang des Bodens transportiert. Der Doppelpfeil verdeutlicht die Transportrichtung des am Boden liegenden Getreides oder Grünmalzreste 2 in Richtung der Entladestation 9, die beispielsweise als Abwurfschacht ausgeführt sein kann.

Die Erfindung umfasst ferner ein Verfahren zum Entleeren eines Keimkastens wie oben beschrieben. Insbesondere umfasst das erfindungsgemäße Verfahren das Entleeren des Keimkastens durch Fördern des Getreides oder Grünmalzes mittels der horizontal angeordneten Fördereinrichtung zu einer Entladestation 9 und das gleichläufige Betreiben der Wendeschnecken derart, dass mittels der Abstreifwerkzeuge auf dem Boden des Behälters nach dem Entleeren befindliches Getreide oder Grünmalzreste in Richtung der Entladestation 9 befördert wird.

Bevorzugt werden durch Sprühen unter Hochdruck insbesondere von Wasser aus der an der Fördereinrichtung angeordneten Hochdrucksprühleiste auf die Wendeschnecken Getreidereste oder Grünmalzreste von den Wendeschnecken entfernt.

Bevorzugt wird bei dem erfindungsgemäßen Verfahren während des Sprühens die Fördereinrichtung 1 und damit auch die Hochdrucksprühleiste 5 in vertikaler Richtung bewegt. Die Bewegung umfasst insbesondere eine Bewegung über die gesamte Höhe der Wendeschnecken 3, um diese vollständig von Getreideresten oder Grünmalzreste befreien zu können.

Die Erfindung umfasst ferner auch ein Verfahren zum Nachrüsten eines Keimkastens, insbesondere eines Keimkastens mit einem Behälter zum Aufnehmen von Getreide, wobei der Behälter einen Boden aufweist und einem Balken, der innerhalb des Behälters angeordnet ist. Der nachzurüstende Keimkasten kann bevorzugt auch eine horizontal zum Boden angeordnete Fördereinrichtung, insbesondere eine Schnecke, zum Be- und Entladen des Behälters aufweisen, wobei die Fördereinrichtung in vertikaler Richtung beweglich und am Balken befestigt sein kann. Am Balken sind vertikal zum Boden angeordnete Wendeschnecken angebracht. Um einen solchen bereits bekannten Keimkasten nachzurüsten, werden gemäß dem erfindungsgemäßen Nachrüstungsverfahren Abstreifwerkzeuge am unteren Ende jeder der Wendeschnecken angebracht und die Wendeschnecken derart eingerichtet, dass sie gleichläufig betrieben werden können.

Bevorzugt umfasst das Verfahren ferner das Anbringen einer verfahrbaren Hochdrucksprühleiste 5 zum Reinigen der Wendeschnecken 3, wobei die Hochdrucksprühleiste 5 mehrere Düsen aufweist und wobei je mindestens eine Düse der Hochdrucksprühleiste 5 auf eine Wendeschnecke 3 gerichtet ist. Die Hochdrucksprühleiste 5 kann vertikal verfahrbar sein. Falls eine Fördereinrichtung 1 wie oben beschrieben vorhanden ist, kann die Hochdrucksprühleiste 5 an der Fördereinrichtung 1 angebracht werden.

Die beschriebenen Maßnahmen, d.h. die Abstreifwerkzeuge 6 in Verbindung mit dem gleichläufigen Betrieb der Wendeschnecken 3 sowie die Hochdrucksprühleiste 5 können unabhängig voneinander in bestehenden Anlagen nachgerüstet werden. Hierfür sind nur geringe bauliche Änderungen, wie beispielsweise eine Wendeschütze, oder eine Softwareanpassung notwendig. Mittels der Hochdrucksprühleiste 5, die das bestehende Hochdrucksystem nutzt, können Getreidereste oder Grünmalzreste von den Wendeschnecken 3 entfernt werden. Durch die Drehrichtungsänderung jeder zweiten Wendeschnecke 3 in Verbindung mit den an jeder Wendeschnecke 3 angebrachten Abstreifwerkzeugen 6 können verbliebene Getreidereste oder Grünmalzreste 2 vom Boden 7 in Richtung eines Endes des Balkens 4 zur Entladestation 9 transportiert werden. Somit kann das Getreide durch die Wendeschnecken 3 im paarweise gegenläufigen Betrieb senkrecht und im gleichläufigen Betrieb waagerecht transportiert werden. Dies ermöglicht einen wesentlich wirtschaftlicheren Betrieb der Anlage sowie eine erhebliche Reduktion der Menge an verbliebenem Getreide nach der Entleerung des Keimkastens durch die Fördereinrichtung 1. Weiterhin ist es nicht mehr notwendig, dass sich Personen im Gefahrenbereich unter der Fördereinrichtung 1 zum Reinigen bzw. Entleeren des Keimkastens aufhalten.

Die Erfindung kann sowohl in einer festen Horde, also einer Anlage bei der der Boden statisch, der Balken jedoch beweglich ist, als auch in einer Drehhorde mit statischem Balken und beweglichem Boden, eingesetzt werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen.

Die Erfindung umfasst ebenfalls einzelne Merkmale in den Figuren auch wenn sie dort im Zusammenhang mit anderen Merkmalen gezeigt sind und/oder vorstehend nicht genannt sind. Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

### Bezugszeichenliste

- 1: Fördereinrichtung
- 2: Getreide oder Grünmalz
- 3: Wendeschnecke
- 4: Balken
- 5: Hochdrucksprühleiste
- 6: Abstreifwerkzeug
- 7: Hordenboden
- 8: Wasserstrahl
- 9: Entladestation
- 10: Schneckenwelle

## Patentansprüche

1. Keimkasten umfassend:
einen Behälter zum Aufnehmen von Getreide, wobei der Behälter einen Boden (7) aufweist,
einen Balken (4), der innerhalb des Behälters angeordnet ist, und
eine horizontal zum Boden (7) angeordnete Fördereinrichtung (1), insbesondere eine Schnecke, zum Be- und Entladen des Behälters, wobei die Fördereinrichtung (1) in vertikaler Richtung beweglich ist, und wobei die Fördereinrichtung (1) am Balken (4) befestigt ist, und
mehrere am Balken (4) vertikal zum Boden (7) angeordnete Wendeschnecken (3), wobei zum Wenden des Getreides die Wendeschnecken (3) paarweise gegenläufig betrieben werden,
***dadurch gekennzeichnet, dass***
an einem dem Boden zugewandten Ende jeder der Wendeschnecken (3) ein Abstreifwerkzeug (6) angeordnet ist, und
zum Entleeren des Keimkastens die Wendeschnecken (3) eingerichtet sind, gleichläufig betrieben zu werden.

2. Keimkasten nach Anspruch 1, wobei der Abstand zwischen den Abstreifwerkzeugen (6) und dem Boden (7) zwischen 0 und 2 mm liegt und bevorzugt 0,5 mm beträgt.

3. Keimkasten nach Anspruch 1 oder 2, wobei die Abstreifwerkzeuge (6) radial über den Rand der jeweiligen Wendeschnecke (3) überstehen.

4. Keimkasten nach einem der vorstehenden Ansprüche, wobei die Abstreifwerkzeuge (6) gebogen ausgeführt sind.

5. Keimkasten nach einem der vorstehenden Ansprüche, wobei der Boden (7) ein Siebblech aufweist.

6. Keimkasten nach einem der vorstehenden Ansprüche, wobei die Abstreifwerkzeuge (6) derart angeordnet sind, dass sich Umfangskreise der Abstreifwerkzeuge (6) benachbarter Wendeschnecken (3) berühren.

7. Keimkasten nach einem der vorstehenden Ansprüche, wobei die Abstreifwerkzeuge (6) aus Kunststoff oder Metall gebildet sind.

8. Keimkasten nach einem der vorstehenden Ansprüche, wobei mittels der Abstreifwerkzeuge (6) bei gleichläufiger Drehung der Wendeschnecken (3) das auf dem Boden (7) befindliche Getreide in Richtung einer Entladestation (9) befördert wird.

9. Keimkasten nach einem der vorstehenden Ansprüche, wobei der Keimkasten ferner eine Hochdrucksprühleiste (5) aufweist, die an einem Gehäuse der Fördereinrichtung (1) angebracht ist und die eingerichtet ist, um durch Sprühen auf die Wendeschnecken (3) Getreide von den Wendeschnecken (3) zu entfernen.

10. Keimkasten nach Anspruch 9, wobei die Hochdrucksprühleiste (5) mit Wasser speisbar ist.

11. Verfahren zum Entleeren eines Keimkastens gemäß einem der vorstehenden Ansprüche, mit den Schritten
- Entleeren des Keimkastens durch Fördern des Getreides mittels der Fördereinrichtung (1) zu einer Entladestation (9),
- gleichläufig Betreiben der Wendeschnecken (3) derart, dass mittels der Abstreifwerkzeuge (6) auf dem Boden (7) des Behälters nach dem Entleeren befindliches Getreide in Richtung der Entladestation (9) befördert wird.

12. Verfahren nach Anspruch 11 zum Entleeren eines Keimkastens gemäß Anspruch 8 oder 9, wobei durch Sprühen unter Hochdruck insbesondere von Wasser aus der an der Fördereinrichtung (1) angeordneten Hochdrucksprühleiste (5) auf die Wendeschnecken (3) Getreidereste oder Grünmalzreste von den Wendeschnecken (3) entfernen werden.

13. Verfahren nach Anspruch 12, wobei während des Sprühens die Fördereinrichtung (1) und damit auch die Hochdrucksprühleiste (5) in vertikaler Richtung bewegt wird.

14. Verfahren zum Nachrüsten eines Keimkastens mit
einem Behälter zum Aufnehmen von Getreide, wobei der Behälter einen Boden (7) aufweist,
einem Balken (4), der innerhalb des Behälters angeordnet ist, und
mehreren am Balken (4) vertikal zum Boden (7) angeordneten Wendeschnecken (3) mit den Schritten:
- Anbringen von Abstreifwerkzeugen (6) am unteren Ende jeder der Wendeschnecken (3),
- Einrichten der Wendeschnecken (3) derart, dass sie gleichläufig betrieben werden.

15. Verfahren zum Nachrüsten eines Keimkastens gemäß Anspruch 14 , wobei das Verfahren ferner umfasst:
- Anbringen einer verfahrbaren Hochdrucksprühleiste (5) zum Reinigen der Wendeschnecken (3), wobei die Hochdrucksprühleiste (5) mehrere Düsen aufweist und wobei je mindestens eine Düse der Hochdrucksprühleiste (5) auf eine Wendeschnecke (3) gerichtet ist.

## Claims

1. A germination box comprising:
a container for receiving grain, wherein the container has a base (7),
a beam (4) arranged inside the container, and
a conveying device (1), in particular a screw, arranged horizontally to the base (7) for loading and unloading the container, wherein the conveying device (1) is movable in the vertical direction, and wherein the conveying device (1) is fastened to the beam (4), and
a plurality of turning screws (3) arranged on the beam (4) vertically to the base (7), wherein the turning screws (3) are operated in pairs in opposite directions to turn the grain,
***characterized in that***
a stripping tool (6) is arranged at an end of each of the turning screws (3) facing the base, and
the turning screws (3) are configured to be operated in the same direction for emptying the germination box.

2. The germination box according to claim 1, wherein the distance between the stripping tools (6) and the base (7) is between 0 and 2 mm and preferably 0.5 mm.

3. The germination box according to claim 1 or 2, wherein the stripping tools (6) project radially beyond the edge of the respective turning screw (3).

4. The germination box according to any one of the preceding claims, wherein the stripping tools (6) are curved.

5. The germination box according to any one of the preceding claims, wherein the base (7) comprises a sieve plate.

6. The germination box according to any one of the preceding claims, wherein the stripping tools (6) are arranged in such a way that circumferential circles of the stripping tools (6) of adjacent turning screws (3) touch each other.

7. The germination box according to any one of the preceding claims, wherein the stripping tools (6) are formed from plastic or metal.

8. The germination box according to any one of the preceding claims, wherein the grain located on the base (7) is conveyed in the direction of an unloading station (9) by means of the stripping tools (6) while the turning screws (3) are rotating in the same direction.

9. The germination box according to any one of the preceding claims, wherein the germination box further comprises a high-pressure spray bar (5) which is attached to a housing of the conveying device (1) and which is adapted to remove grain from the turning screws (3) by spraying onto the turning screws (3).

10. The germination box according to claim 9, wherein the high-pressure spray bar (5) can be fed with water.

11. A method of emptying a germination box according to any one of the preceding claims, comprising the steps of
- emptying the germination box by conveying the grain by means of the conveying device (1) to an unloading station (9),
- operating the turning screws (3) in the same direction in such a way that grain located on the base (7) of the container after emptying is conveyed towards the unloading station (9) by means of the stripping tools (6).

12. The method according to claim 11 for emptying a germination box according to claim 8 or 9, wherein grain residues or green malt residues are removed from the turning screws (3) by spraying under high pressure, in particular water, from the high-pressure spray bar (5) arranged on the conveying device (1) onto the turning screws (3).

13. The method according to claim 12, wherein during spraying the conveying device (1) and thus also the high-pressure spray bar (5) is moved in the vertical direction.

14. A method of retrofitting a germination box with
a container for receiving grain, wherein the container has a base (7),
a beam (4) arranged inside the container, and
a plurality of turning screws (3) arranged on the beam (4) vertically to the base (7), with the steps:
- attaching stripping tools (6) to the lower end of each of the turning screws (3),
- configuring the turning screws (3) so that they are operated in the same direction.

15. The method of retrofitting a germination box according to claim 14, the method further comprising:
- attaching a movable high-pressure spray bar (5) for cleaning the turning screws (3), wherein the high-pressure spray bar (5) comprises a plurality of nozzles and wherein at least one nozzle of a high-pressure spray bar (5) is directed at a turning screw (3).

## Revendications

1. Germoir, comprenant :
un conteneur destiné à recevoir des grains, ledit conteneur ayant un fond (7),
une barre (4) disposée à l'intérieur du conteneur, et
un dispositif de transport (1) disposé horizontalement par rapport au fond (7), en particulier une vis sans fin, pour charger et décharger le conteneur, ledit dispositif de transport (1) étant mobile dans la direction verticale, et ledit dispositif de transport (1) étant fixé à la barre (4), et
plusieurs vis de retournement (3) disposées contre la barre (4) verticalement par rapport au fond (7), lesdites vis de retournement (3) étant actionnées en sens inverse par paires pour le retournement des grains,
**caractérisé**
**en ce qu'**un outil de raclage (6) est disposé à une extrémité dirigée vers le sol de chacune des vis de retournement (3), et en ce que
pour vider le germoir, les vis de retournement (3) sont prévues pour être actionnées dans le même sens.

2. Germoir selon la revendication 1, où l'espacement entre les outils de raclage (6) et le fond (7) est compris entre 0 et 2 mm et est de préférence égal à 0,5 mm.

3. Germoir selon la revendication 1 ou la revendication 2, où les outils de raclage (6) dépassent radialement du bord de la vis de retournement (3) correspondante.

4. Germoir selon l'une des revendications précédentes, où les outils de raclage (6) sont coudés.

5. Germoir selon l'une des revendications précédentes, où le fond (7) présente une tôle de tamisage.

6. Germoir selon l'une des revendications précédentes, où les outils de raclage (6) sont disposés de sorte que les cercles périphériques des outils de raclage (6) de vis de retournement (3) voisines se touchent.

7. Germoir selon l'une des revendications précédentes, où les outils de raclage (6) sont constitués de matière plastique ou de métal.

8. Germoir selon l'une des revendications précédentes, où les grains se trouvant sur le sol (7) sont transportés vers un poste de décharge (9) au moyen des outils de raclage (6) lors d'une rotation simultanée des vis de retournement (3).

9. Germoir selon l'une des revendications précédentes, où le germoir comprend en outre une rampe de pulvérisation sous haute pression (5) montée sur un carter du dispositif de transport (1) et prévue pour retirer les grains des vis de retournement (3) par pulvérisation sur lesdites vis de retournement (3).

10. Germoir selon la revendication 9, où la rampe de pulvérisation sous haute pression (5) peut être alimentée en eau.

11. Procédé de vidange d'un germoir selon l'une des revendications précédentes, comprenant les étapes suivantes :
- vidange du germoir par transport des grains au moyen du dispositif de transport (1) vers un poste de décharge (9),
- actionnement simultané des vis de retournement (3) de manière à transporter vers le poste de décharge (9), au moyen des outils de raclage (6), les grains se trouvant sur le fond (7) du conteneur après vidange.

12. Procédé selon la revendication 11, pour la vidange d'un germoir selon la revendication 8 ou la revendication 9, où des restes de grains ou de malt vert sont retirés des vis de retournement (3) par pulvérisation sous haute pression, en particulier d'eau, sur les vis de retournement (3), à partir de la rampe de pulvérisation sous haute pression (5) disposée sur le dispositif de transport (1).

13. Procédé selon la revendication 12, où, pendant la pulvérisation, le dispositif de transport (1) et avec lui la rampe de pulvérisation sous haute pression (5) sont déplacés dans la direction verticale.

14. Procédé de rééquipement d'un germoir comprenant
un conteneur destiné à recevoir des grains, ledit conteneur ayant un fond (7),
une barre (4) disposée à l'intérieur du conteneur, et
plusieurs vis de retournement (3) disposées contre la barre (4) verticalement par rapport au fond (7), comprenant les étapes suivantes :
- mise en place d'outils de raclage (6) à l'extrémité inférieure de chaque vis de retournement (3),
- ajustement des vis de retournement (3) de manière à pouvoir les actionner dans le même sens.

15. Procédé de rééquipement d'un germoir selon la revendication 14, ledit procédé comprenant en outre :
- la mise en place d'une rampe mobile de pulvérisation sous haute pression (5) pour le nettoyage des vis de retournement (3), ladite rampe de pulvérisation sous haute pression (5) comportant plusieurs buses et au moins une buse de ladite rampe de pulvérisation sous haute pression (5) étant orientée vers une vis de retournement (3).
